# EUROPÄISCHE PATENTSCHRIFT

(11) **EP 1 574 283 B1**
(45) Veröffentlichungstag und Bekanntmachung des Hinweises auf die Patenterteilung: **24.05.2006**
(21) Anmeldenummer: 04400012.3
(22) Anmeldetag: 01.03.2004
(51) Int. Cl.: B23Q 1/58, B23Q 16/00

(54) **Linearantrieb mit besonderer Ausführung von Anschlägen zur Hubbegrenzung des Schlittens**
Linear actuator with special configuration of abutments for limiting the stroke of the slide
Actionneur linéaire avec une configuration spéciale des butées de fin de course du chariot

(43) Veröffentlichungstag der Anmeldung: 14.09.2005
(73) Patentinhaber: FESTO AG & Co, 73734 Esslingen (DE)
(72) Erfinder: Angué, Eric, 70806 Kornwestheim (DE); Kopp, Simone, 73734 Esslingen (DE)
(74) Vertreter: Abel, Martin

(56) Entgegenhaltungen:
- EP-B- 0 868 965
- DE-A- 10 013 195
- DE-A- 19 531 523
- DE-A- 19 649 719

## Beschreibung

Die Erfindung betrifft einen Linearantrieb, mit einem Antriebsgehäuse, in dem sich zu einer Linearbewegung antreibbare Antriebsmittel befinden, die mit einem außen am Antriebsgehäuse linear verstellbar geführten Schlitten antriebsmäßig gekoppelt sind, und mit zwischen dem Antriebsgehäuse und dem Schlitten wirksamen Hubbegrenzungsmitteln, die einen am Schlitten angeordneten ersten Anschlag und einen in die Bewegungsbahn des ersten Anschlages ragenden, vom Schlitten übergriffenen gehäusefesten ersten Gegenanschlag aufweisen, gemäss dem Oberbegriff des Anspruch 1 (siehe z.B., DE-10013195-A).

Ein aus der EP 0868965 B1 bekannter Linearantrieb enthält einen das Antriebsgehäuse übergreifenden Schlitten, an dessen Unterseite ein erster Anschlag angeordnet ist, der mit einem in seiner Bewegungsbahn liegenden gehäusefesten Gegenanschlag kooperiert, um die bei einer Hubrichtung erreichbare Schlittenendlage zu definieren. Der Arbeitsbereich dieser Hubbegrenzungsmittel ist ein zwischen Antriebsgehäuse und Schlitten definierter, zur Seite hin offener spaltartige Zwischenraum.

Bei einem aus der DE 19531523 C2 bekannten Linearantrieb liegen die Hubbegrenzungsmittel vollkommen frei. Die mit dem Schlitten kooperierenden gehäusefesten Gegenanschläge sind mittels Befestigungsklammern am Außenumfang des Antriebsgehäuses fixiert. Indem verschiedene, alternativ nutzbare Befestigungsstellen für die Gegenanschläge vorhanden sind, lässt sich der Schlittenhub in weiten Bereichen justieren.

Es ist die Aufgabe der vorliegenden Erfindung, einen Linearantrieb zu schaffen, der bei kompakten Abmessungen eine zuverlässige Hubvorgabe des Schlittens ermöglicht.

Zur Lösung dieser Aufgabe ist ein Linearantrieb gemäss Anspruch 1 vorgesehen.

Somit befinden sich wenigstens der erste Anschlag und der mit diesem kooperierende erste Gegenanschlag der Hubbegrenzungsmittel in einer kanalartigen Gehäuseausnehmung des Antriebsgehäuses, sodass sich der Arbeitsbereich dieser Hubbegrenzungsmittel bei Bedarf optimal nach außen hin abschotten lässt, was die Verletzungsgefahr und die Verschmutzungsanfälligkeit verringert. Die Installation des ersten Gegenanschlages in einer Wanddurchbrechung einer der die kanalartige Gehäuseausnehmung begrenzenden Seitenwände gewährleistet eine gute Zugänglichkeit für den ersten Gegenanschlag, beispielsweise zum Zwecke einer Umrüstung oder im Servicefall. Bei entsprechender Ausgestaltung des Schlittens besteht überdies die Möglichkeit, den ersten Anschlag und den Gegenanschlag so zu installieren, dass beim gegenseitigen Aufprall eine symmetrische Krafteinleitung stattfindet, die die zur Linearführung des Schlittens vorhandene Führungseinrichtung entlastet.

Vorteilhafte Weiterbildungen der Erfindung gehen aus den Unteransprüchen hervor.

Zweckmäßigerweise ist das Antriebsgehäuse zur Bildung der kanalartigen Gehäuseausnehmung U-förmig konturiert. Die beiden Schenkel repräsentieren dann die sich gegenüberliegenden Seitenwände der Gehäuseausnehmung.

Der erste Anschlag sitzt vorzugsweise an einer an einem stirnseitigen Endbereich des Schlittens angeordneten, in die kanalartige Gehäuseausnehmung hineinragenden Tragwand. Diese Tragwand kann plattenartig ausgebildet sein und entspricht in ihrer Außenkontur vorzugsweise im Wesentlichen der Innenkontur der kanalartigen Gehäuseausnehmung.

Um eine Feineinstellung der zugehörigen Schlittenendposition vornehmen zu können, ist der erste Anschlag zweckmäßigerweise in axial justierbarer Weise an der Tragwand angeordnet, wobei insbesondere eine stufenlose Einstellbarkeit gegeben ist.

Diese Feineinstellbarkeit erweist sich insbesondere auch dann als großer Vorteil, wenn in der Seitenwand des Antriebsgehäuses mehrere, in Hubrichtung des Schlittens zueinander beabstandete Wanddurchbrechungen vorgesehen sind, die wahlweise mit dem ersten Gegenanschlag bestückt werden können. Zur Grobeinstellung des Hubes kann der erste Gegenanschlag in der der gewünschten Schlittenendposition am nächsten liegenden Wanddurchbrechung positioniert werden. Die Feineinstellung kann dann über den justierbaren ersten Anschlag vorgenommen werden.

Die Einstellung des ersten Anschlages wird erleichtert, wenn eine die kanalartige Gehäuseausnehmung stirnseitig begrenzende Abschlusswand über eine dem ersten Anschlag in der Hubrichtung gegenüberliegende fensterartige Durchbrechung verfügt. Diese Durchbrechung ermöglicht auch ein Eintauchen der über den Schlitten axial vorstehenden Abschnitte des ersten Anschlages, wenn der Schlitten in die zweite Schlittenendposition fährt. Dadurch kann die Baulänge des Antriebsgehäuses verhältnismäßig kurz gehalten werden.

Der erste Gegenanschlag ist zweckmäßigerweise derart formschlüssig in die zugeordnete Wanddurchbrechung einsetzbar, dass er sich in der Hubrichtung des Schlittens gegenüber dem Gehäuse abstützen kann. Dadurch werden die beim Aufprall des Schlittens einwirkenden Kräfte überwiegend vom Gehäuse aufgenommen, und es ist eine präzise Beibehaltung der Position des ersten Gegenanschlages gewährleistet.

Der Linearantrieb kann in stangenloser Bauart ausgeführt sein. Vorzugsweise ist allerdings eine Koppelstange zur Übertragung der Antriebskraft zwischen den Antriebsmitteln und dem Schlitten vorgesehen. Mit dieser Koppelstange kann eine in das Antriebsgehäuse eingesetzte Klemmeinheit kooperieren, die ein zeitweiliges axial unbewegliches Festsetzen der Koppelstange bezüglich des Antriebsgehäuses ermöglicht, um den Schlitten nach Bedarf zu positionieren.

Besonders kompakte Abmessungen, verbunden mit einer sehr-stabilen Abstützung des Schlittens, ergeben sich, wenn der Schlitten so in die kanalartige Gehäuseausnehmung versenkt ist, dass er an seinen beiden Längsseiten von den Seitenwänden der Gehäuseausnehmung flankiert wird. Zwischen den beiden Längsseiten und den Seitenwänden ist vorzugsweise eine Führungseinrichtung zur Linearführung angeordnet.

Um eine Sichtkontrolle der Hubbegrenzungsfunktion zu ermöglichen, kann die Außenkontur des ersten Gegenanschlages so an die Innenkontur der zugeordneten Wanddurchbrechung angepasst sein, dass ein von außen her einen Einblick in die kanalartige Gehäuseausnehmung ermöglichendes Sichtfenster verbleibt.

Die Hubbegrenzungsmittel ermöglichen zweckmäßigerweise bei beiden Hubrichtungen eine Vorgabe der Schlittenendposition. Hierzu kann zusätzlich zu dem Paar zusammenwirkender erster Anschläge und Gegenanschläge ein weiteres Paar zusammenwirkender zweiter Anschläge und Gegenanschläge vorhanden sein, wobei das erste Paar in der einen Hubrichtung und das andere Paar in der anderen Hubrichtung des Schlittens wirksam ist. Der zweite Anschlag sitzt zweckmäßigerweise an einem stirnseitigen Endbereich des Schlittens innerhalb der kanalartigen Gehäuseausnehmung, während der zweite Gegenanschlag in axialer Verlängerung dazu an einer die Gehäuseausnehmung stirnseitig begrenzenden Abschlusswand des Antriebsgehäuses angeordnet ist.

Jeder Anschlag bzw. Gegenanschlag kann als reiner Festanschlag ausgebildet sein oder auch Stoßdämpfmittel zur Verringerung des Aufpralls beinhalten.

Nachfolgend wird die Erfindung anhand der beiliegenden Zeichnung näher erläutert. In dieser zeigen:
- Fig. 1: eine bevorzugte erste Bauform des Linearantriebes in einer perspektivischen Rückansicht bei eingefahrener Schlittenendposition,
- Fig. 2: den Linearantrieb aus Fig. 1 in einer entsprechenden Darstellung bei ausgefahrener Schlittenendposition,
- Fig. 3: den in Fig. 1 gezeigten Zustand des Linearantriebes in einer perspektivischen Vorderansicht,
- Fig. 4: den in Fig. 2 gezeigten Zustand des Linearantriebes in einer perspektivischen Vorderansicht, wobei der Einsatz eines auswechselbaren ersten Gegenanschlages angedeutet ist,
- Fig. 5: eine Rückansicht des Linearantriebes mit Blickrichtung gemäß Pfeil V aus Fig. 2,
- Fig. 6: einen Querschnitt durch den Linearantrieb gemäß Schnittlinie VI-VI aus Fig. 2,
- Fig. 7: einen Querschnitt durch den Linearantrieb gemäß Schnittlinie VII-VII aus Fig. 2,

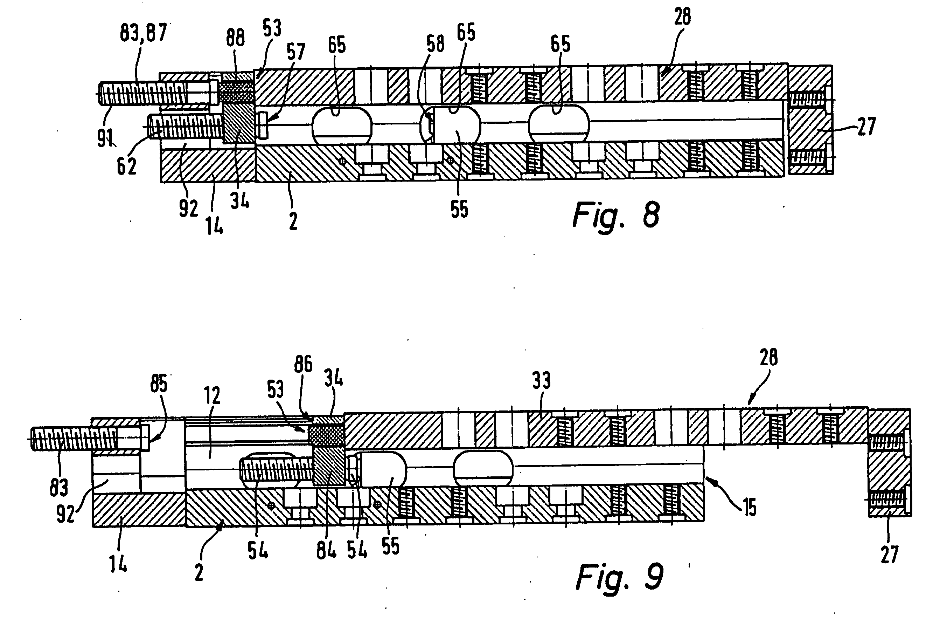

- Fig. 8: den Linearantrieb bei eingefahrener Schlittenendposition gemäß Schnittlinie VIII-VIII aus Fig. 5,
- Fig. 9: einen Längsschnitt des Linearantriebes gemäß Schnittlinie VIII-VIII aus Fig. 5, wobei der Schlitten die ausgefahrene Schlittenendposition gemäß Fig. 2 und 4 einnimmt,
- Fig. 10: einen Längsschnitt bei dem in Fig. 8 gezeigten Betriebszustand und gemäß Schnittlinie X-X aus Fig. 5,
- Fig. 11: einen Längsschnitt bei dem in Fig. 9 gezeigten Betriebszustand und wiederum gemäß Schnittlinie X-X,
- Fig. 12: einen weiteren Längsschnitt durch den Linearantrieb bei die eingefahrene Schlittenposition einnehmendem Schlitten gemäß Schnittlinie XII-XII aus Fig. 5,

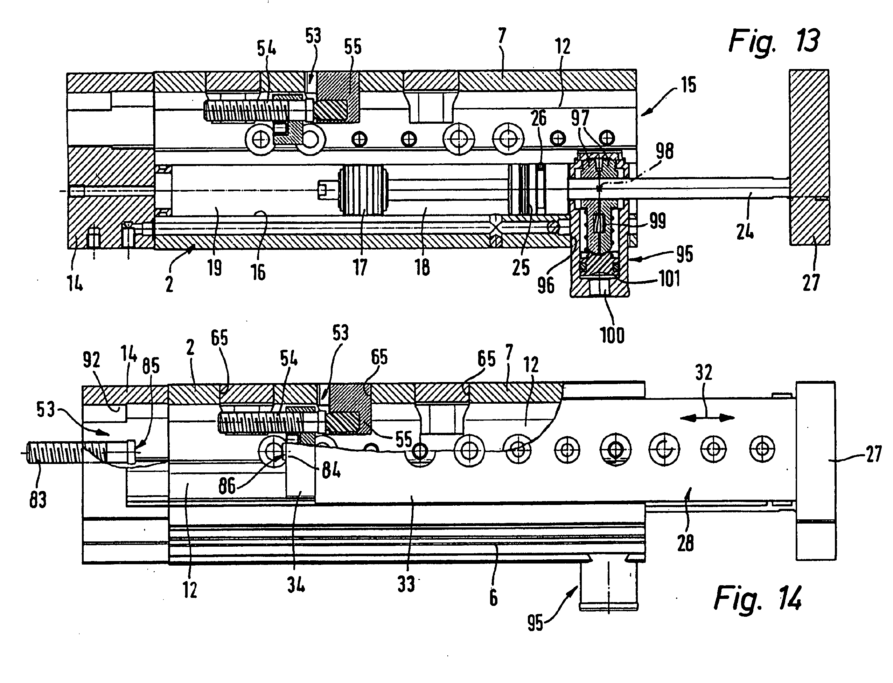

- Fig. 13: einen entsprechend der Fig. 12 gelegten Schnitt durch den Linearantrieb bei die ausgefahrene Schlittenposition einnehmendem Schlitten und
- Fig. 14: eine teilweise aufgebrochene Draufsicht des Linearantriebes mit Blickrichtung gemäß Pfeil XIV aus Fig. 5 in der ausgefahrenen Schlittenendposition.

Der in der Zeichnung abgebildete Linearantrieb ist zur Betätigung mit Fluidkraft ausgelegt, könnte allerdings auch elektrisch aktivierbar sein.

Der Linearantrieb besitzt ein Längsgestalt aufweisendes Antriebsgehäuse 2, mit einer Längsachse 3, einer dazu rechtwinkeligen Querachse 4 und einer zu den beiden vorgenannten Achsen wiederum rechtwinkeligen Hochachse 5. Die genannten drei Achsen spannen also ein kartesisches System auf.

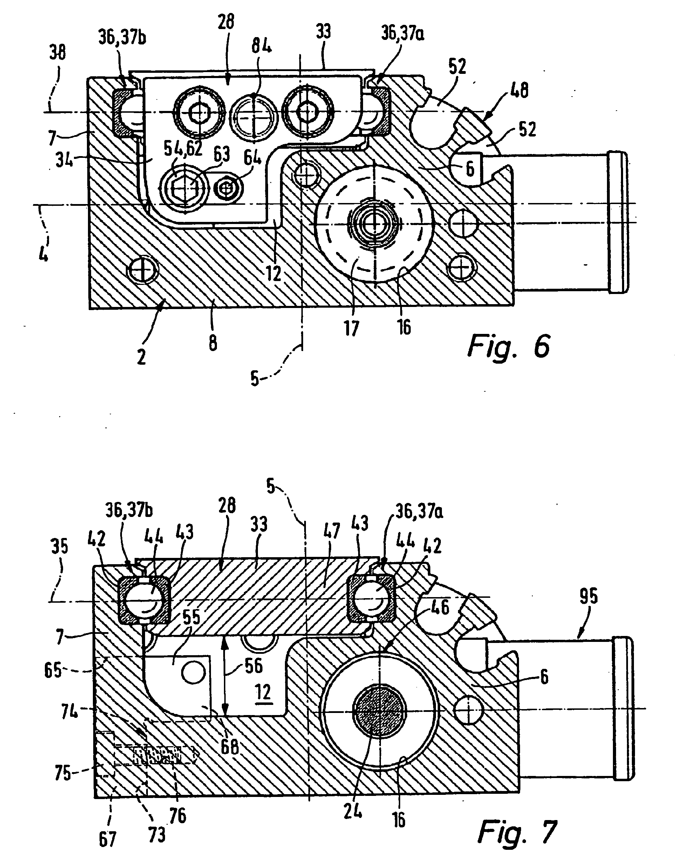

Das Antriebsgehäuse 2 ist im Querschnitt bevorzugt im Wesentlichen U-förmig profiliert (siehe insbesondere Fig. 6 und 7), wobei die beiden den U-Schenkeln entsprechenden Gehäuseabschnitte zwei parallel zueinander in Richtung der Längsachse 3 verlaufende erste und zweite Seitenwände 6, 7 definieren. Der dem U-Verbindungssteg entsprechende Gehäuseabschnitt bildet eine Bodenwand 8, die gemeinsam mit den beiden Seitenwänden 6, 7 eine kanalartige Gehäuseausnehmung 12 begrenzen, die an der der Bodenwand 8 entgegengesetzten Längsseite offen ist.

An der rückwärtigen Stirnseite 13 ist die kanalartige Gehäuseausnehmung 12 durch eine an die Stirnfläche des Antriebsgehäuses 2 angesetzte stirnseitige Abschlusswand 14 begrenzt. An der entgegengesetzten vorderen Stirnseite 15 ist die Gehäuseausnehmung 12 hingegen offen.

Die erste Seitenwand 6 hat in Richtung der Querachse 4 eine größere Dicke als die verhältnismäßig schmale zweite Seitenwand 7. Dies rührt von einem in ihrem Innern ausgebildeten, längsverlaufenden und ringsum geschlossenen Hohlraum her, der als Antriebsraum 16 bezeichnet sei, da sich in seinem Innern zu einer Linearbewegung in Richtung der Längsachse 3 antreibbare Antriebsmittel 17 befinden.

Die Antriebsmittel 17 bestehen beim Ausführungsbeispiel aus einem im Antriebsraum 16 verschiebbar angeordneten Kolben, der den Antriebsraum 16 unter Abdichtung in eine vordere und eine rückwärtige Arbeitskammer 18, 19 unterteilt. In jede Arbeitskammer 18, 19 mündet ein gesonderter Fluidkanal 22a, 22b, durch den hindurch ein fluidisches Druckmedium eingespeist oder abgeführt werden kann, um den Kolben 17 so gesteuert zu beaufschlagen, dass er sich in einer gewünschten Weise verlagert. Die Fluidversorgung geschieht über nicht näher dargestellte Fluidschläuche, die an mit den Fluidkanälen 22a, 22b kommunizierenden Anschlussöffnungen 23 anschließbar sind, welche sich zweckmäßigerweise an der Außenfläche der stirnseitigen Abschlusswand 14 befinden.

Eine als Kolbenstange ausgebildete Koppelstange 24 ist einerseits an dem Kolben 17 befestigt und ragt andererseits im Bereich der vorderen Stirnseite 15 aus dem Antriebsgehäuse 2 heraus. Dabei durchsetzt sie unter Abdichtung einen von der vorderen Stirnseite 15 her in den Antriebsraum 16 eingesetzten stopfenartigen Abschlussdeckel 25, der mittels eines das Antriebsgehäuse 2 durchsetzenden Querstiftes 26 axial fixiert ist. Den rückwärtigen dichten Abschluss des Antriebsraumes 16 bewirkt die stirnseitige Abschlusswand 14, die die Mündung des Antriebsraumes 16 überdeckt.

Der aus dem Antriebsgehäuse 2 herausragende Endabschnitt der Koppelstange 24 greift in zug- und druckfester Weise an einem Verbindungsjoch 27 an, das Bestandteil eines außen am Antriebsgehäuse 2 linear in Richtung der Längsachse 3 verstellbar geführten Schlittens 28 ist. Somit sind die Antriebsmittel 17 mit dem Schlitten 28 antriebsmäßig gekoppelt, und der Schlitten 18 führt bei entsprechender Betätigung der Antriebsmittel 17 eine gleichgerichtete lineare Hubbewegung 32 aus.

Wie insbesondere aus Fig. 6 und 7 ersichtlich ist, nimmt der Antriebsraum 16 innerhalb des Antriebsgehäuses 2 eine bezogen auf die Querachse 4 außermittige Position ein. Das Zentrum des Antriebsraumes 16 ist also in Richtung der Querachse 4 gegenüber dem Querschnittszentrum des Antriebsgehäuses 2 zum Gehäuserand hin versetzt.

Der Schlitten 28 hingegen ist der kanalartigen Gehäuseausnehmung 12 zugeordnet, wobei er ein sich in Richtung der Längsachse 3 an das Verbindungsjoch 27 anschließendes plattenartiges Schlittenhauptteil 33 aufweist, an dessen dem Verbindungsjoch 27 entgegengesetzter Rückseite noch eine bevorzugt plattenartige Tragwand 34 angesetzt ist.

Das Schlittenhauptteil 33 ist so ausgerichtet, dass seine Erstreckungsebene 35 rechtwinkelig zur Hochachse 5 verläuft.

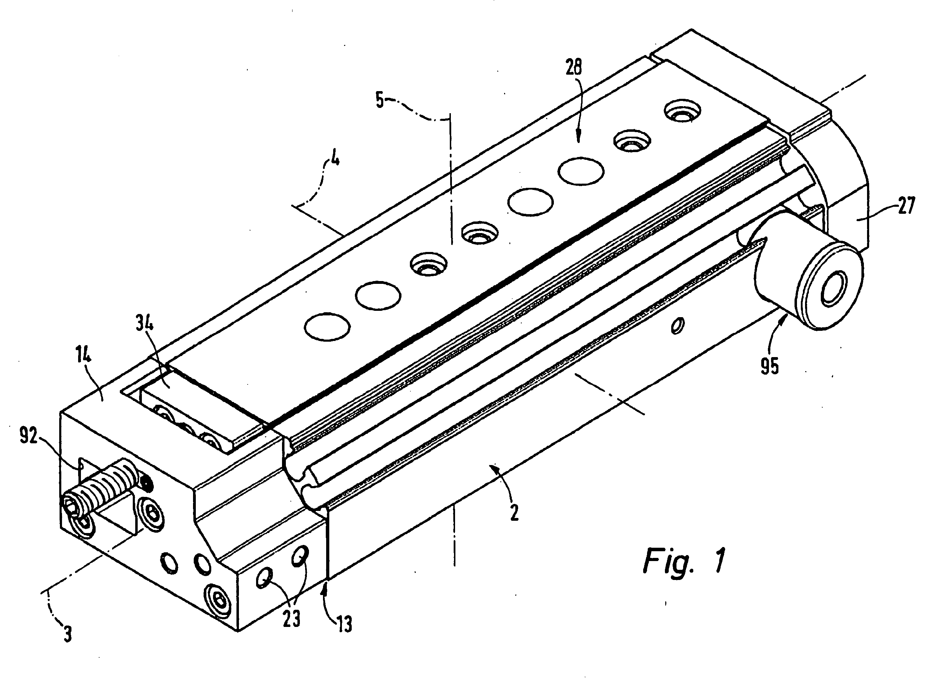

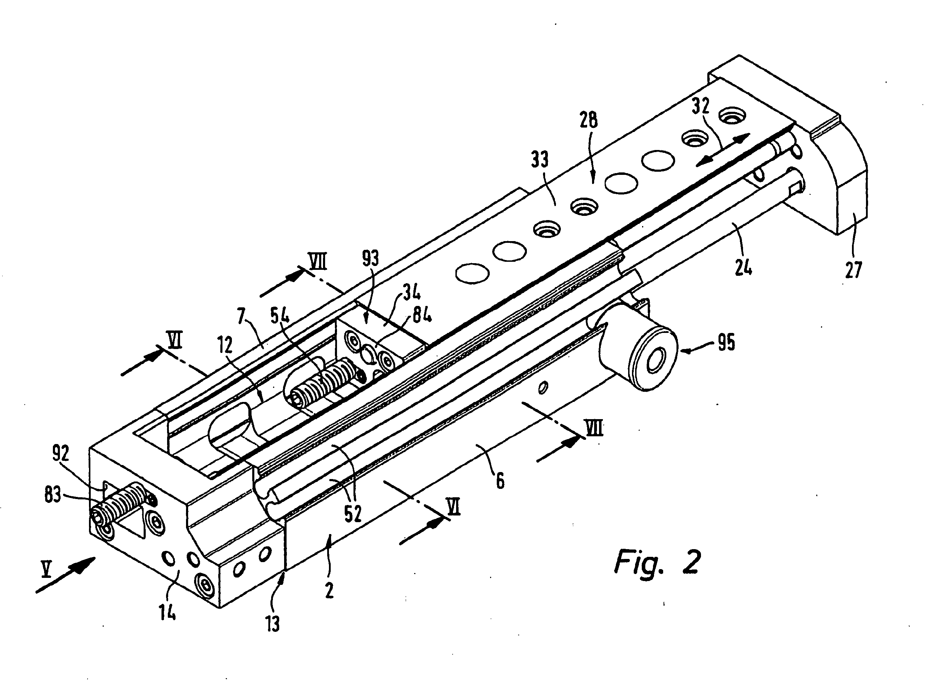

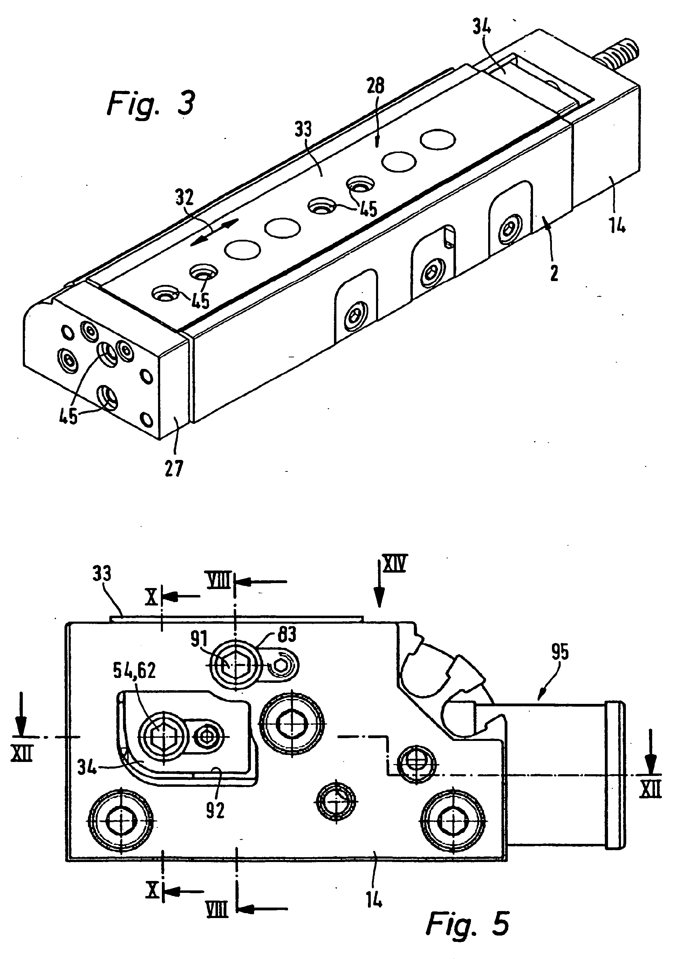

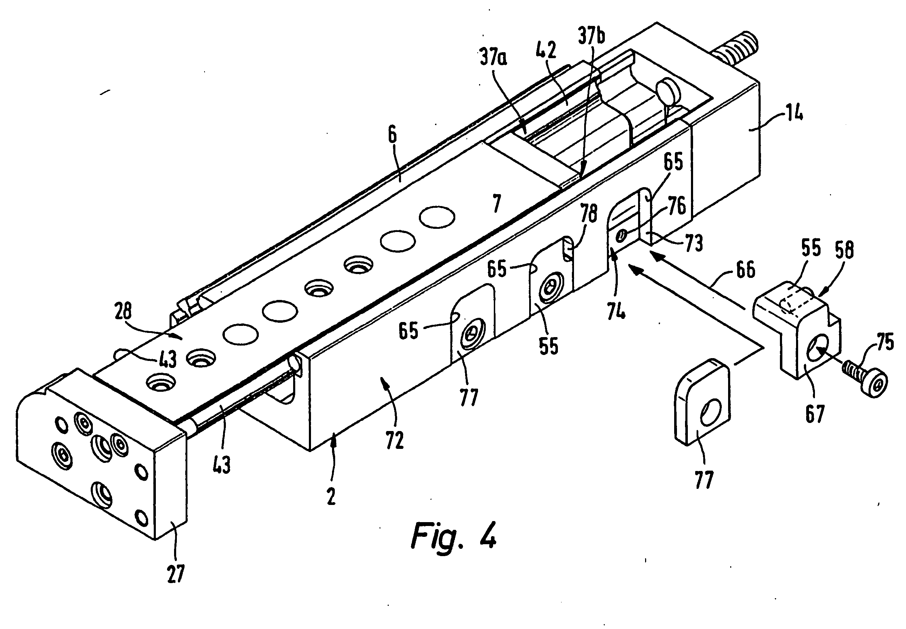

Die Länge des Schlittens 28 entspricht im Wesentlichen derjenigen des Antriebsgehäuses 2, wobei sich der Schlitten 28 vor allem mit seinem Schlittenhauptteil 33 im Bereich der offenen Längsseite der kanalartigen Gehäuseausnehmung 12 entlang dieser erstreckt. Somit bildet er praktisch eine Abdeckung für die offene Längsseite der Gehäuseausnehmung 12, wobei die abgedeckte Länge variabel und von der momentanen Position des Schlittens 28 abhängig ist. Ist die Koppelstange 24 weitestmöglich in den Antriebsraum 16 eingefahren, ergibt sich die aus Fig. 1 und 3 ersichtliche eingefahrene Schlittenposition, in der der Schlitten 28 die kanalartige Gehäuseausnehmung 12 über praktisch ihre gesamte Länge hinweg abdeckt. Ist die Koppelstange 24 hingegen weiter aus dem Antriebsgehäuse 2 ausgefahren, ragt auch der Schlitten 28 weiter über die vordere Stirnseite 15 des Antriebsgehäuses 2 hinaus, sodass nurmehr der der vorderen Stirnseite 15 zugeordnete Längenabschnitt der Gehäuseausnehmung 12 vom Schlitten 28 abgedeckt wird, während die Gehäuseausnehmung 12 im Übrigen offen liegt (Fig. 2 und 4).

Der Schlitten 28 ist in Richtung der Hochachse 5 so versenkt in der kanalartigen Gehäuseausnehmung 12 angeordnet, dass er an seinen beiden Längsseiten von den beiden Seitenwänden 6, 7 flankiert wird. Dies ist aus Fig. 7 gut ersichtlich. Als Resultat ergibt sich, dass der Schlitten 28 nicht oder nur geringfügig in Richtung der Hochachse 5 über das Antriebsgehäuse 2 vorsteht, was eine verhältnismäßig niedrige Bauhöhe zulässt.

Zur Führung und Abstützung des Schlittens 28 bezüglich des Antriebsgehäuses 2 ist eine Führungseinrichtung 36 vorgesehen, die über zwei parallel und mit Abstand zueinander angeordnete Führungseinheiten 37a, 37b verfügt, die in Richtung der Querachse 4 zwischen dem Schlitten 28 und dem Antriebsgehäuse 2 platziert sind. Genauer gesagt wird der Schlitten 28 an seinen einander entgegengesetzten Längsseiten außen von den beiden Führungseinheiten 37a, 37b flankiert, wobei jede Führungseinheit 37a, 37b wiederum von einem Endabschnitt der am Schlitten 28 vorbeigreifenden Seitenwände 6, 7 flankiert ist. Gemäß Fig. 6 und 7 erstrecken sich die beiden Führungseinheiten 37a, 37b gemeinsam in einer zur Hochachse 5 rechtwinkeligen Führungsebene 38, wobei diese Führungsebene 38 beim Ausführungsbeispiel mit der Erstreckungsebene 35 des Schlittenhauptteils 33 zusammenfällt.

Jede Führungseinheit 37a, 37b besitzt eine an der der jeweils anderen Seitenwand zugewandten Innenseite der zugeordneten ersten bzw. zweiten Seitenwand 6, 7 angeordnete gehäuseseitige Führungsbahn 42. Diese gehäuseseitigen Führungsbahnen 42 erstrecken sich zweckmäßigerweise über die gesamte Länge des Antriebsgehäuses 2. Jeder gehäuseseitigen Führungsbahn 42 liegt in Richtung der Querachse 4 eine schlittenseitige Führungsbahn 43 gegenüber, die sich entlang des Schlittenhauptteils 33 erstreckt. Zwischen jedem Paar einander zugeordneter gehäuseseitiger und schlittenseitiger Führungsbahnen 42, 43 befindet sich eine Lagerelementanordnung 44, die sich insbesondere aus einer Gruppe von in einem Käfig zusammengefassten Wälzlagerelementen zusammensetzt. Führt der Schlitten 28 eine Hubbewegung 32 aus, läuft die Lagerelementanordnung 44 an den mit ihr kooperierenden Führungsbahnen 42, 43 ab, sodass sich eine präzise Linearführung für den Schlitten 28 einstellt.

Die Führungsbahnen 42, 43 sind bevorzugt an leistenförmigen Führungselementen ausgebildet, die an dem Antriebsgehäuse 2 bzw. dem Schlitten 28 fest angebracht sind.

Über die Führungseinrichtung 36 werden am Schlitten 28 angreifende Kräfte in das Antriebsgehäuse 2 eingeleitet. Diese Kräfte können von einer beliebigen Masse herrühren, die an dem Schlitten 28 zum Zwecke einer Verlagerung befestigt wird. Bei dieser Masse kann es sich beispielsweise um eine Komponente einer Maschine oder um einen weiteren Linearantrieb handeln. An dem Schlitten 28 angeordnete Befestigungsmittel 45, beispielsweise in Gestalt von Gewindebohrungen, ermöglichen die lösbare Befestigung der jeweiligen Last. Diese Befestigungsmittel 45 sind zweckmäßigerweise sowohl an dem Schlittenhauptteil 33 als auch an dem Verbindungsjoch 27 vorgesehen.

Die Führungseinheiten 37a, 37b sind vorzugsweise so installiert, dass die sich ergebende Führungsebene 38 in Richtung der Hochachse 5 versetzt zum Antriebsraum 16 angeordnet ist. Die Größe des Versatzes ist insbesondere so gewählt, dass das Schlittenhauptteil 33 in Richtung der Hochachse 5 höher liegt als der obere Scheitelbereich 46 des Antriebsraumes 16. Auf diese Weise ergibt sich die beim Ausführungsbeispiel realisierte vorteilhafte Möglichkeit, die gehäusefeste Führungsbahn 42 der der ersten Seitenwand 6 zugeordneten ersten Führungseinheit 37a in Richtung der Hochachse 5 über dem Antriebsraum 16 zu platzieren, sodass der Antriebsraum 16 in Richtung der Querachse 4 wenigstens ein Stück weit von dem die schlittenseitige Führungsbahn 43 der ersten Führungseinheit 37a tragenden längsseitigen Randabschnitt 47 des Schlittens 28 übergriffen wird.

Es kann insbesondere vorgesehen sein, dass sich die gehäuseseitige Führungsbahn 42 der ersten Führungseinheit 37a im Wesentlichen in der Zone über dem oberen Scheitelbereich 46 des Antriebsraumes 16 befindet.

Der Schlitten 28 ist also so angeordnet, dass er den Antriebsraum 16 ein Stück weit in Querrichtung des Antriebsgehäuses 2 überlappt, andererseits aber gemeinsam mit den beiden Seitenwänden 6, 7 und der Bodenwand 8 einen Hohlraum begrenzt, der in der noch zu beschreibenden Weise sehr gut für Hubbegrenzungsmaßnahmen nutzbar ist.

Da die beiden Führungseinheiten 37a, 37b in Richtung der Querachse 4 einen großen Abstand zueinander aufweisen, ergibt sich eine gute Abstützung des Schlittens 28 gegen an ihm angreifende Kippmomente. -

Zweckmäßigerweise überragt der Schlitten 28 den Antriebsraum 16 nur ein Stück weit, sodass längsseits neben dem zugeordneten Randabschnitt 47 des Schlittens 28 ein unabgedeckter Randabschnitt 48 der ersten Seitenwand 6 des Antriebsgehäuses 2 verbleibt, der zur Integration einer oder mehrerer, in Richtung der Längsachse 3 verlaufender Verankerungsnuten 52 nutzbar ist. Diese Verankerungsnuten 52 ermöglichen insbesondere die Verankerung von Sensoren, mit denen sich eine berührungslose Positionserfassung der im Antriebsraum 16 angeordneten Antriebsmittel 17 bewerkstelligen lässt. Auf diese Weise können letztlich die interessierenden Hubpositionen des Schlittens 28 detektiert werden.

Indem der vom Schlitten 28 unabgedeckte Randabschnitt 48 der zweiten Seitenwand 7 eine abgerundete Kontur besitzt, können problemlos mehrere und insbesondere zwei Verankerungsnuten ohne gegenseitige Behinderung längsseits nebeneinanderliegend realisiert werden.

Der Linearantrieb ist mit Hubbegrenzungsmitteln 53 ausgestattet, die eine variable Hubbegrenzung des Schlittens 28 bei beiden Hubrichtungen ermöglichen. Somit besteht die Möglichkeit, unabhängig von dem durch die Antriebsmittel 17 realisierbaren Hub die im ausgefahrenen Zustand gewünschte ausgefahrene Schlittenendposition und die im eingefahrenen Zustand gewünschte eingefahrene Schlittenendposition vorzugeben. Die Hubbegrenzungsmittel 53 wirken mittelbar oder unmittelbar zwischen dem Antriebsgehäuse 2 und dem Schlitten 28.

Zur Vorgabe der ausgefahrenen Schlittenendposition sind ein am Schlitten 28 angeordneter erster Anschlag 54 und ein in dessen Bewegungsbahn ragender, gehäusefester erster Gegenanschlag 55 vorgesehen. Beide Anschläge befinden sich innerhalb der kanalartigen Gehäuseausnehmung 12 in dem Höhenabschnitt 56, der bei eingefahrenem Schlitten 28 in Höhenrichtung zwischen dem Schlitten 28 und der Bodenwand 8 definiert ist.

Der erste Anschlag 54 ist an der der stirnseitigen Abschlusswand 14 zugewandten rückwärtigen Stirnseite des Schlittens 28 angeordnet, wobei er zweckmäßigerweise an dem in den Höhenabschnitt 56 ragenden Abschnitt der Tragwand 34 angeordnet ist. Der erste Anschlag 54 hat eine in Ausfahrrichtung, also zum Verbindungsjoch 27 hin, orientierte erste Anschlagfläche 57, der eine am ersten Gegenanschlag 55 angeordnete erste Gegenanschlagfläche 58 zugewandt ist, wobei sich der erste Gegenanschlag 55 in einem Bereich der kanalartigen Gehäuseausnehmung 12 befindet, der von dem Schlittenhauptteil 33 übergriffen wird. Der erste Gegenanschlag 55 wird somit durch den Schlitten 28 zur Umgebung hin abgeschirmt.

Beim Ausführungsbeispiel ist der erste Anschlag 54 als Anschlagschraube 62 ausgebildet, die die Tragwand 34 durchsetzt, wobei ein die erste Anschlagfläche 57 aufweisender Anschlagkopf unter dem Schlitten 28 liegt, während ein mit einem Gewinde versehener Einstellschaft rückseitig in Richtung zur stirnseitigen Abschlusswand 14 von der Tragwand 34 absteht. Am freien Ende des Einstellschaftes der Anschlagschraube 62 befindet sich eine den Angriff eines Schraubwerkzeuges ermöglichende Betätigungspartie 63, wobei die Möglichkeit besteht, durch Verdrehen der Anschlagschraube 62 die Axialposition der ersten Anschlagfläche 57 mit Bezug zum Schlitten 28 axial, insbesondere stufenlos, variabel zu justieren. Geeignete Kontermittel 64 erlauben ein Sichern der getroffenen Einstellung.

Zur Installation des ersten Gegenanschlages 55 ist die in Richtung der Querachse 4 weiter vom Antriebsraum 16 entfernte zweite Seitenwand 7 mit mehreren Wanddurchbrechungen 65 versehen, die jeweils die kanalartige Gehäuseausnehmung 12 mit der Umgebung des Antriebsgehäuses 2 verbinden, wobei der erste Gegenanschlag 55 von außen her so in eine der Wanddurchbrechungen 65 eingesetzt ist, dass er seitlich in die Gehäuseausnehmung 12 und dort in die Bewegungsbahn des ersten Anschlages 54 hineinragt.

Die Wanddurchbrechungen 65 sind in der Hubrichtung des Schlittens 28 mit Abstand zueinander angeordnet. Somit kann durch wahlweise Bestückung einer dieser Wanddurchbrechungen 65 der mögliche Ausfahrhub und mithin die vorgegebene ausgefahrene Schlittenendposition mehrstufig grob vorgegeben werden. Beim Ausführungsbeispiel sind insgesamt drei Wanddurchbrechungen 65 vorgesehen, wobei der erste Gegenanschlag 55 in der mittleren Wanddurchbrechung 65 installiert ist. Er könnte aber auch beispielsweise, wie dies in Fig. 4 angedeutet ist, in eine der beiden anderen Wanddurchbrechungen 65 eingesetzt werden, um zu erreichen, dass der Schlitten in der ausgefahrenen Schlittenendposition mehr oder weniger weit aus dem Antriebsgehäuse 2 ausgefahren ist.

Man hat also die Möglichkeit, durch selektive Bestückung der Wanddurchbrechungen 65 mit einem ersten Gegenanschlag 55 eine Grobeinstellung des Ausfahrhubes vorzunehmen, um dann unter Justierung des ersten Anschlages 54 eine abschließende Feineinstellung vorzunehmen.

Die Anzahl der Wanddurchbrechungen 65 und auch deren Abstand untereinander wird sich in der Regel an der Baulänge des Antriebsgehäuses 2 und am maximal möglichen Schlittenhub orientieren. Ist der maximal mögliche Schlittenhub beispielsweise sehr gering, kann auch bereits eine einzige Wanddurchbrechung 65 zur Installation eines ersten Gegenanschlages 55 ausreichen, sodass dort dann die weitere Einstellung ausschließlich über das Justieren des ersten Anschlages 54 bewerkstelligt wird.

In der Einsetzrichtung 66 betrachtet ist die Außenkontur des ersten Gegenanschlages 55 so an die Innenkontur der betreffenden Wanddurchbrechung 65 angepasst, dass das Einsetzen ein Steckvorgang ist, im Rahmen dessen sich eine formschlüssige Verbindung zwischen dem ersten Gegenanschlag 55 und dem Antriebsgehäuse 2 einstellt, die eine Abstützung des ersten Gegenanschlages 55 in der Hubrichtung des Schlittens 28, zumindest in dessen Ausfahrrichtung, bewirkt.

Zweckmäßigerweise verfügt der erste Gegenanschlag 55 über eine Haltepartie 67 und eine diesbezüglich im Querschnitt kleinere Anschlagpartie 68, wobei letztere die erste Gegenanschlagfläche 58 trägt und gegenüber der Haltepartie 67 in der Einsetzrichtung 66 vorsteht. Die Wanddurchbrechung 65 ist in der Einsetzrichtung 66 abgestuft und erweitert sich zur Außenfläche 72 hin zu einem Befestigungsabschnitt 73, der partiell durch eine nach außen weisende, von der Bodenwand 8 definierte Befestigungsfläche 74 begrenzt ist. Im eingesetzten Zustand liegt die Haltepartie 67 an der Befestigungsfläche 74 an, während die Anschlagpartie 68 an der Befestigungsfläche 74 vorbei in die Gehäuseausnehmung 12 ragt. Durch eine lösbare Schraubverbindung zwischen der Haltepartie 67 und dem die Befestigungsfläche 74 aufweisenden Gehäuseabschnitt lässt sich der erste Gegenanschlag 55 sicher fixieren. Exemplarisch ist in diesem Zusammenhang eine Befestigungsschraube 75 gezeigt, die die Haltepartie 67 unter Abstützung daran durchsetzt und in eine zur Befestigungsfläche 74 offene Gewindebohrung 76 des Antriebsgehäuses 2 einschraubbar ist.

Die momentan nicht für Anschlagzwecke benötigte Wanddurchbrechung 65 kann jeweils lösbar durch einen Deckel 77 verschlossen werden, der beispielsweise in der gleichen Weise wie der erste Gegenanschlag 55 befestigt wird, oder aber beispielsweise auch durch eine Rastverbindung. Durch das Verschließen mit einem Deckel wird einem Eindringen von Verunreinigungen vorgebeugt. Während der erste Gegenanschlag 55 insbesondere aus Metall besteht, können die verwendeten Deckel durchaus aus Kunststoffmaterial gefertigt sein. -

Die Formgebung ist insbesondere so gewählt, dass sich im installierten Zustand des ersten Gegenanschlages 55 wie auch der Deckel 77 außen ein bündiger Abschluss mit der Außenfläche 72 des Antriebsgehäuses 2 einstellt.

Um bei Bedarf die Hubbegrenzungsfunktion überprüfen zu können, ist beim Ausführungsbeispiel die Außenkontur des ersten Gegenanschlages 55 so ausgebildet, dass sie nicht vollumfänglich der Innenkontur der zugeordneten Wanddurchbrechung 65 entspricht, sodass zwischen den beiden Konturen ein durchgehender Freiraum verbleibt, der ein Sichtfenster 78 definiert, durch das hindurch am ersten Gegenanschlag 55 vorbei von außen her ein Einblick auf die in der Gehäuseausnehmung 12 platzierte Anschlagpartie 68 möglich ist.

Um den gegenseitigen Aufprall zu minimieren, ist der Gegenanschlag 55 mit einem zum ersten Anschlag 54 ragenden gummielastischen Pufferelement 82 bestückt. Zusätzlich oder alternativ könnte insbesondere der erste Anschlag 54 nicht als reiner Festanschlag wie beim Ausführungsbeispiel ausgebildet sein, sondern kombiniert mit Stoßdämpfermitteln.

Um auch die eingefahrene Schlittenendposition variabel vorgeben zu können, enthalten die Hubbegrenzungsmittel 53 zusätzlich noch einen vom Antriebsgehäuse 2 getragenen zweiten Anschlag 83, der vorzugsweise an der stirnseitigen Abschlusswand 14 angeordnet ist und eine in Richtung der Längsachse 3 dem Schlitten 28 zugewandte zweite Anschlagfläche 85 besitzt. Letzterer liegt eine in Einfahrrichtung des Schlittens orientierte zweite Gegenanschlagfläche 86 gegenüber, die an einem am rückwärtigen Endbereich des Schlittens 28 angeordneten zweiten Gegenanschlag 84 vorgesehen ist. Letzterer ist beim Ausführungsbeispiel unmittelbar von der Stirnfläche der Tragwand 34 gebildet, während der zweite Anschlag 83 vergleichbar dem ersten Anschlag 54 als Anschlagschraube 87 ausgeführt ist, die durch die stirnseitige Abschlusswand 14 hindurchgeschraubt ist und sich relativ zu dieser axial justieren lässt. Die Justierung und Fixierung erfolgt in gleicher Weise wie bei der den ersten Anschlag 54 bildenden Anschlagschraube 62.

Auch dem zweiten Anschlag 83 ist beim Ausführungsbeispiel ein Pufferelement 88 zur Aufprallreduzierung zugeordnet.

Für alle Anschlagmittel gilt, dass bei Bedarf Stoßdämpfmittel vorgesehen sein können, entweder gesondert oder in Kombination mit dem betreffenden Anschlag, um insbesondere eine fluidische Endlagendämpfung, beispielsweise unter Verwendung hydraulischer Stoßdämpfer, vornehmen zu können.

Der zweite Anschlag 83 ist zur Veränderung der eingefahrenen Schlittenendposition ohne weiteres von der Rückseite des Antriebsgehäuses 2 her zugänglich, da seine den Angriff eines Einstellwerkzeuges ermöglichende Betätigungspartie 91 auf der dem Schlitten 28 entgegengesetzten Außenseite der stirnseitigen Abschlusswand 14 liegt.

Um eine vergleichbare Justierung auch des ersten Anschlages 54 vornehmen zu können, ist die Abschlusswand 14, in Hubrichtung des Schlittens 28 mit dem ersten Anschlag 54 fluchtend, mit einer fensterartigen Durchbrechung 92 versehen. Durch diese Durchbrechung 92 hindurch kann unabhängig von der Hubposition des Schlittens 28 eine Betätigung des ersten Anschlages 54 zu Justierzwecken erfolgen.

Es ergibt sich ferner der Vorteil, dass der erste Anschlag 62 mit seinem rückseitig über den Schlitten 28 vorstehenden Längenabschnitt in die fensterartige Durchbrechung 92 eintauchen oder gar durch diese Durchbrechung 92 hindurchragen kann, wenn der rückwärtige Endbereich des Schlittens 28 in der eingefahrenen Schlittenendposition in unmittelbarer Nähe zu der stirnseitigen Abschlusswand 14 zu liegen kommt. Dies ermöglicht eine beträchtliche Einsparung an Baulänge für das Antriebsgehäuse 2.

Beim Ausführungsbeispiel kommt der weitere Vorteil hinzu, dass der den ersten Anschlag 54 tragende Endbereich des Schlittens 28 - vorliegend gebildet von der Tragwand 34 - als Ausschiebekopf 93 fungiert, der beim Einfahrhub des Schlittens eventuell in der Gehäuseausnehmung 12 vorhandene Verunreinigungen bzw. Fremdkörper durch die fensterartige Durchbrechung 92 hindurch zur Umgebung hin ausstößt.

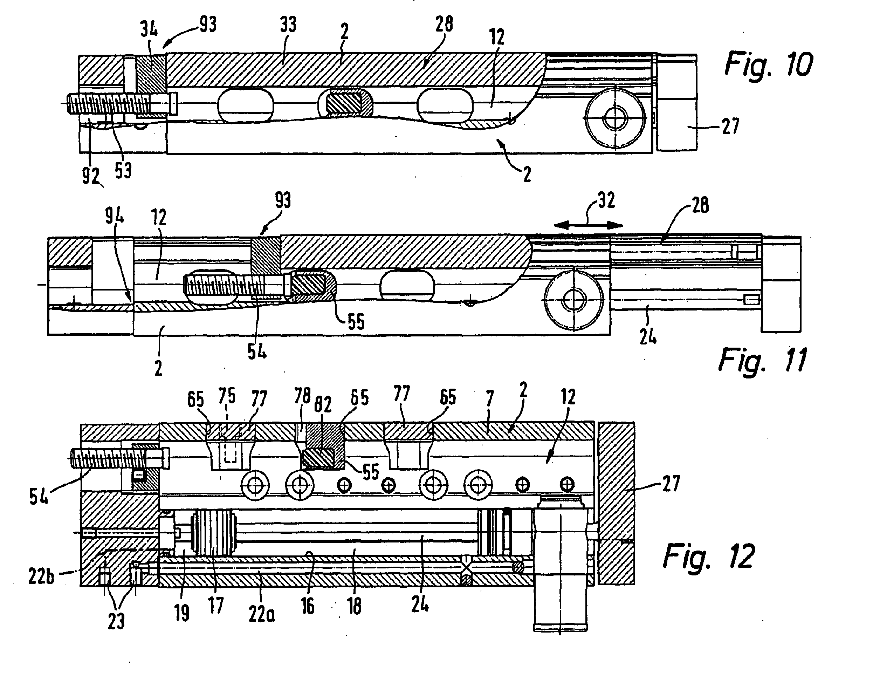

Damit die Verunreinigungen nicht etwa durch einen störenden Absatz im Übergangsbereich zu der Abschlusswand 14 zurückgehalten werden, ist die Innenkontur der fensterartigen Durchbrechung 92 zweckmäßigerweise so ausgebildet, dass sie mit den Innenflächen der die Gehäuseausnehmung 12 definierenden Seiten- und Bodenwände 6, 7, 8, zumindest im Bereich der Bodenwand 8, wenigstens fluchtet, vorzugsweise aber sogar wenigstens minimal quer zur Längsachse 3 zurückspringt. Der zurückspringende Bereich ist in Fig. 11 durch die Bezugsziffer 94 kenntlich gemacht.

Eine Berührung zwischen dem Ausschiebekopf 93 und dem Antriebsgehäuse 2 ist zur Gewährleistung der Ausschubfunktion nicht erforderlich, auch kann auf eine elastische Dichtung in der Regel verzichtet werden. Indem die Tragwand 34 eine der Innenkontur der Gehäuseausnehmung 12 im Wesentlichen entsprechende Außenkontur aufweist, kann ein sehr geringes Spaltmaß eingehalten werden, sodass auch ohne Berührung die Ausstoßfunktion gewährleistet ist. Wie die Zeichnung zeigt, ragt der Ausschiebekopf 93 zumindest annähernd bis zu der der offenen Längsseite der Gehäuseausnehmung 12 gegenüberliegenden Bodenwand 8 der kanalartigen Gehäuseausnehmung 12.

Zweckmäßigerweise ist der Linearantrieb noch mit einer Klemmeinheit 95 ausgestattet, mit der sich die Koppelstange 24 während einer gewünschten Zeitspanne axial unbeweglich bezüge lich des Antriebsgehäuses 2 festsetzen lässt.

Die Klemmeinheit 95 ist patronenartig ausgebildet und in dem dem Abschlussdeckel 25 zum Verbindungsjoch 27 axial vorgelagerten Bereich von der Seite her in eine Ausnehmung 96 des Antriebsgehäuses 2 eingesetzt, wobei sie von der Koppelstange 24 durchsetzt wird. -

Die Klemmeinheit 95 ist insbesondere für fluidische Betätigung ausgelegt. Sie enthält zweckmäßigerweise zwei um eine rechtwinkelig zur Längsachse der Koppelstange 24 verlaufende Schwenkachse 98 verschwenkbare Klemmbacken 97, die beide von der Koppelstange 24 durchsetzt werden und die durch eine sich zwischen ihnen abstützende Federeinrichtung 99 normalerweise so auseinandergespreizt werden, dass sie klemmend auf den Außenumfang der Koppelstange 24 einwirken. Um die Blockierung aufzuheben, kann über einen Fluidanschluss 100 ein Druckmedium eingespeist werden, das einen Betätigungskolben 101 gegen die Klemmbacken 97 verschiebt, sodass diese entgegen der Federkraft in eine Lösestellung verschwenkt werden, in der die Koppelstange 24 für die Axialbewegung freigegeben ist.

Indem die Klemmeinheit 95 exakt in die zugeordnete Gehäuseausnehmung 12 eingepasst ist, kann eine in Hubrichtung des Schlittens 28 spielfreie Befestigung gewährleistet werden, was ein spielfreies Festsetzen der Kolbenstange und somit auch des mit dieser verbundenen Schlittens 28 gewährleistet.

## Patentansprüche

1. Linearantrieb, mit einem Antriebsgehäuse (2), in dem sich zu einer Linearbewegung antreibbare Antriebsmittel (17) befinden, die mit einem außen am Antriebsgehäuse (2) linear verstellbar geführten Schlitten (28) antriebsmäßig gekoppelt sind, und mit zwischen dem Antriebsgehäuse (2) und dem Schlitten (28) wirksamen Hubbegrenzungsmitteln (53), die ei-nen am Schlitten (28) angeordneten ersten Anschlag (54) und einen in die Bewegungsbahn des ersten Anschlages (54) ragenden, vom Schlitten (28) übergriffenen gehäusefesten ersten Gegenanschlag (55) aufweisen, wobei der Schlitten (28) so angeordnet ist, dass er die offene Längsseite einer von zwei sich gegenüberliegenden Seitenwänden (6, 7) begrenzten kanalartigen Gehäuseausnehmung (12) des Antriebsgehäuses (2) positionsabhängig über eine mehr oder weniger große Länge abdeckt, und wobei sich der erste Anschlag (54) innerhalb der Gehäuseausnehmung (12) befindet, **dadurch gekennzeichnet, dass** wenigstens eine der Seitenwände (7) mindestens eine Wanddurchbrechung (65) aufweist, in die der mit dem ersten Anschlag (54) kooperierende erste Gegenanschlag (55) von außen her so einsetzbar ist, dass er seitlich in die Gehäuseausnehmung (12) hineinragt.

2. Linearantrieb nach Anspruch 1, **dadurch gekennzeichnet, dass** das Antriebsgehäuse (2) zur Bildung der kanalartigen Gehäuseausnehmung (12) U-förmig konturiert ist.

3. Linearantrieb nach Anspruch 1 oder 2, **dadurch gekennzeichnet, dass** der Schlitten (28) an einem stirnseitigen Endbereich eine in die kanalartige Gehäuseausnehmung (12) hineinragende, den ersten Anschlag (54) tragende Tragwand (34) aufweist.

4. Linearantrieb nach Anspruch 3, **dadurch gekennzeichnet, dass** die Außenkontur der Tragwand (34) im Wesentlichen der Innenkontur der kanalartigen Gehäuseausnehmung (12) entspricht.

5. Linearantrieb nach Anspruch 3 oder 4, **dadurch gekennzeichnet, dass** der erste Anschlag (54) axial, insbesondere stufenlos, justierbar an der Tragwand (34) angeordnet ist.

6. Linearantrieb nach einem der Ansprüche 3 bis 5, **dadurch gekennzeichnet, dass** die kanalartige Gehäuseausnehmung (12) in Verlängerung des Schlittens (28) von einer der Tragwand (34) gegenüberliegenden stirnseitigen Abschlusswand (14) begrenzt ist, die eine in der Hubrichtung des Schlittens (28) mit dem ersten Anschlag (54) fluchtende fensterartige Durchbrechung (92) aufweist.

7. Linearantrieb nach einem der Ansprüche 1 bis 6, **dadurch gekennzeichnet, dass** in ein und derselben Seitenwand (7) mehrere, in Hubrichtung des Schlittens (28) zueinander beabstandete Wanddurchbrechungen (65) vorgesehen sind, die wahlweise mit dem ersten Gegenanschlag (55) bestückbar sind.

8. Linearantrieb nach Anspruch 7, **gekennzeichnet durch** mindestens einen Deckel (77) zum lösbaren Verschließen der nicht mit einem ersten Gegenanschlag (55) bestückten Wanddurchbrechung(en) (65).

9. Linearantrieb nach einem der Ansprüche 1 bis 8, **dadurch gekennzeichnet, dass** der erste Gegenanschlag (55) derart formschlüssig in die Wanddurchbrechung (65) einsetzbar ist, dass er sich in der Hubrichtung des Schlittens (28) gegenüber dem Antriebsgehäuse (2) abstützt.

10. Linearantrieb nach einem der Ansprüche 1 bis 9, **dadurch gekennzeichnet, dass** die Antriebsmittel (17) mit einer Koppelstange (24) verbunden sind, die stirnseitig aus dem Antriebsgehäuse (2) herausragt und am Schlitten (28) angreift.

11. Linearantrieb nach Anspruch 10, **gekennzeichnet durch** eine in das Antriebsgehäuse (2) eingesetzte und von der Koppelstange (24) durchsetzte Klemmeinheit (95) zum axial unbeweglichen Festsetzen der Koppelstange (24) bezüglich des Antriebsgehäuses (2).

12. Linearantrieb nach einem der Ansprüche 1 bis 11, **dadurch gekennzeichnet, dass** der Schlitten (28) derart versenkt in der kanalartigen Gehäuseausnehmung (12) angeordnet ist, dass er an seinen beiden Längsseiten von den Seitenwänden (6, 7) der Gehäuseausnehmung (12) flankiert wird.

13. Linearantrieb nach einem der Ansprüche 1 bis 12, **dadurch gekennzeichnet, dass** der in eine Wanddurchbrechung (65) eingesetzte erste Gegenanschlag (55) außen bündig mit der Außenfläche (72) des Antriebsgehäuses (2) abschließt.

14. Linearantrieb nach einem der Ansprüche 1 bis 13, **dadurch gekennzeichnet, dass** die Außenkontur des ersten Gegenanschlages (55) und die Innenkontur der zugeordneten Wanddurchbrechung (65) so aufeinander abgestimmt sind, dass zwischen den beiden Konturen ein die seitliche Einsicht in die kanalartige Gehäuseausnehmung (12) ermöglichendes Sichtfenster (78) definiert ist.

15. Linearantrieb nach einem der Ansprüche 1 bis 14, **dadurch gekennzeichnet, dass** ein Paar zusammenwirkender zweiter Anschläge und Gegenanschläge (83, 84) vorhanden ist, das im Vergleich zu dem Paar erster Anschläge und Gegenanschläge (54, 55) bei entgegengesetzter Hubrichtung des Schlittens (28) wirksam ist.

16. Linearantrieb nach Anspruch 15, **dadurch gekennzeichnet, dass** der zweite Anschlag (84) an einem stirnseitigen Endbereich des Schlittens (28) innerhalb der kanalartigen Gehäuseausnehmung (12) und der zweite Anschlag (83) in axialer Verlängerung dazu an einer die Gehäuseausnehmung (12) stirnseitig begrenzenden Abschlusswand (14) des Antriebsgehäuses (2) angeordnet ist.

## Claims

1. Linear drive with a drive housing (2) wherein drive means (17) capable of being driven to perform a linear movement and coupled for drive to a slide (28) guided for linear movement on the outside of the housing (2)are located, and with stroke limiting means (53) acting between the drive housing (2) and the slide (28) and comprising a first stop (54) located on the slide (28) and a first mating stop (55) located on the housing, which projects into the path of the first stop (54) and is overlapped by the slide (28), wherein the slide (28) is so arranged that, depending on position, it covers a shorter or longer section of the open side of a channel-like housing recess (12) of the drive housing (2) bounded by two opposite side walls (6, 7), and wherein the first stop (54) is located within the housing recess (12), **characterised in that** at least one of the side walls (7) has a wall aperture (65) into which the first mating stop (55) acting together with the first stop (54) can be installed from the outside to project laterally into the housing recess (12).

2. Linear drive according to claim 1, **characterised in that** the drive housing (2) has a U-shaped contour to form the channel-like housing recess (12).

3. Linear drive according to claim 1 or 2, **characterised in that** the slide (28) has a supporting wall (34) projecting into the channel-like housing recess (12) and supporting the first stop (54) in an end area.

4. Linear drive according to claim 3, **characterised in that** the external contour of the supporting wall (34) essentially matches the internal contour of the channel-like housing recess (12).

5. Linear drive according to claim 3 or 4, **characterised in that** the first stop (54) is mounted on the supporting wall (34) for axial, in particular continuous, adjustment.

6. Linear drive according to any of claims 3 to 5, **characterised in that** the channel-like housing recess (12), in extension of the slide (28), is bounded by an end wall (14) located opposite the supporting wall (34), which has a window-like aperture (92) aligned with the first stop (54) in the direction of the stroke of the slide (28).

7. Linear drive according to any of claims 1 to 6, **characterised in that** a plurality of wall apertures (65) optionally fitted with the first mating stop (55) is provided in one and the same side wall (7) at a distance from one another in the direction of the stroke of the slide (28).

8. Linear drive according to claim 7, **characterised by** at least one cover (77) for releasably sealing the wall aperture(s) (65) not fitted with a first mating stop (55).

9. Linear drive according to any of claims 1 to 8, **characterised in that** the first mating stop (55) can be positively installed into the wall aperture (65), so that it is supported against the drive housing (2) in the direction of the stroke of the slide (28).

10. Linear drive according to any of claims 1 to 9, **characterised in that** the drive means (17) are connected to a coupling rod (24) projecting from the end face of the drive housing (2) and acting on the slide (28).

11. Linear drive according to claim 10, **characterised by** a clamping unit (95) for the axially fixed location of the coupling rod (24) relative to the drive housing (2), which is installed into the drive housing (2) and through which the coupling rod (24) passes.

12. Linear drive according to any of claims 1 to 11, **characterised in that that** the slide (28) is recessed into the channel-like housing recess (12), so that its two sides are flanked by the side walls (6, 7) of the housing recess (12).

13. Linear drive according to any of claims 1 to 12, **characterised in that** the first mating stop (55) installed into a wall aperture (65) is externally flush with the outer surface (72) of the drive housing (2).

14. Linear drive according to any of claims 1 to 13, **characterised in that** the external contour of the first mating stop (55) is so matched to the internal contour of the associated wall aperture (65) that a window (78) allowing a lateral view into the channel-like housing recess (12) is defined between the two contours.

15. Linear drive according to any of claims 1 to 14, **characterised in that** a pair of co-operating second stops and mating stops (83, 84) is provided which, compared to the pair of first stops and mating stops (54, 55), becomes effective in the opposite direction of the stroke of the slide (28).

16. Linear drive according to claim 15, **characterised in that** the second stop (84) is located in an end area of the slide (28) within the channel-like housing recess (12) and the second stop (83) is located in axial extension thereof at an end wall (14) of the drive housing (2) bounding the end of the housing recess (12).

## Revendications

1. Actionneur linéaire, comprenant un boîtier d'entraînement (2), dans lequel se trouvent des moyens d'entraînement (17) pouvant être entraînés pour un déplacement linéaire, lesquels sont couplés pour l'entraînement avec un chariot (28) guidé à l'extérieur sur le boîtier d'entraînement (2) de façon à pouvoir coulisser dans le sens linéaire, et avec des moyens de limitation de course (53), efficaces entre le chariot d'entraînement (2) et le chariot (28), qui présentent une première butée (54) disposée sur le chariot (28) et une première contre-butée (55) solidaire du boîtier, dépassant dans la trajectoire de déplacement de la première butée (54) et recouverte par le chariot (28), le chariot (28) étant disposé de telle sorte qu'il recouvre le côté longitudinal ouvert d'un évidement de boîtier (12), en forme de canal et délimité par deux parois latérales (6, 7) se faisant face, du boîtier d'entraînement (2) sur une longueur plus ou moins grande, en fonction de la position et la première butée (54) se trouvant à l'intérieur de l'évidement de boîtier (12), **caractérisé en ce qu'**au moins une des parois latérales (7) présente au moins un percement de paroi (65), dans laquelle la première contre-butée (55) coopérant avec la première butée (54) peut être insérée par l'extérieur de telle sorte qu'elle dépasse latéralement dans l'évidement de boîtier (12).

2. Actionneur linéaire selon la revendication 1, **caractérisé en ce que** le boîtier d'entraînement (2) présente un contour en forme de U pour former l'évidement de boîtier (12) de type canal.

3. Actionneur linéaire selon la revendication 1 ou 2, **caractérisé en ce que** le chariot (28) présente sur une zone d'extrémité frontale une paroi portante (34) supportant la première butée (54) et dépassant à l'intérieur de l'évidement de boîtier (12) de type canal.

4. Actionneur linéaire selon la revendication 3, **caractérisé en ce que** le contour extérieur de la paroi portante (34) correspond sensiblement au contour intérieur de l'évidement de boîtier (12) de type canal.

5. Actionneur linéaire selon la revendication 3 ou 4, **caractérisé en ce que** la première butée (54) est disposée axialement, en particulier sans gradins, de façon réglable sur la paroi porteuse (34).

6. Actionneur linéaire selon l'une quelconque des revendications 3 à 5, **caractérisé en ce que** l'évidement de boîtier (12) de type canal est délimité dans le prolongement du chariot (28) par une paroi terminale (14) côté avant opposée à la paroi portante (34), qui présente un percement (92) de type fenêtre aligné avec la première butée (54) dans le sens de levage du chariot (28).

7. Actionneur linéaire selon l'une quelconque des revendications 1 à 6, **caractérisé en ce que** plusieurs percements de paroi (65) espacés les uns des autres dans le sens de levage du chariot (28) sont prévus dans une seule et même paroi latérale (7), lesquels peuvent être équipés en option de la première contre-butée (55).

8. Actionneur linéaire selon la revendication 7, **caractérisé par** au moins un couvercle (77) pour la fermeture amovible du (des) percement(s) de paroi (65) non équipé(s) d'une première contre-butée (55).

9. Actionneur linéaire selon l'une quelconque des revendications 1 à 8, **caractérisé en ce que** la première contre-butée (55) peut être insérée par complémentarité de formes dans le percement de paroi (65) de telle sorte qu'il s'appuie dans le sens de levage du chariot (28) par rapport au boîtier d'entraînement (2).

10. Actionneur linéaire selon l'une quelconque des revendications 1 à 9, **caractérisé en ce que** les moyens d'entraînement (17) sont reliés à une tige de couplage (24) qui dépasse frontalement du boîtier d'entraînement (2) et s'applique sur le chariot (28).

11. Actionneur linéaire selon la revendication 10, **caractérisé par** une unité de serrage (95) insérée dans le boîtier d'entraînement (2) et traversée par la tige de couplage (24) pour la fixation immobile dans le sens axial de la tige de couplage (24) par rapport au boîtier d'entraînement (2).

12. Actionneur linéaire selon l'une quelconque des revendications 1 à 11, **caractérisé en ce que** le chariot (28) est disposé noyé dans l'évidement de boîtier (12) de type canal de telle sorte qu'il est flanqué sur ses deux côtés longitudinaux par les parois latérales (6, 7) de l'évidement de boîtier (12).

13. Actionneur linéaire selon l'une quelconque des revendications 1 à 12, **caractérisé en ce que** la première contre-butée (55) insérée dans un percement de paroi (65) se termine à l'extérieur au même niveau que la surface extérieure (72) du boîtier d'entraînement (2).

14. Actionneur linéaire selon l'une quelconque des revendications 1 à 13 **caractérisé en ce que** le contour extérieur de la première contre-butée (55) et le contour intérieur du percement de paroi (65) attribué sont harmonisés entre eux de telle sorte qu'une fenêtre d'inspection (78) permettant la vue latérale dans l'évidement de boîtier (12) de type canal est définie entre les deux contours.

15. Actionneur linéaire selon l'une quelconque des revendications 1 à 14, **caractérisé en ce qu'**une paire de secondes butées et contre-butées (83, 84) coopérantes est présente, laquelle est efficace par rapport à la paire de premières butées et contre-butées (54, 55) avec un sens de levage opposé du chariot (28).

16. Actionneur linéaire selon la revendication 15, **caractérisé en ce que** la seconde butée (84) est disposée sur une zone d'extrémité côté avant du chariot (28) à l'intérieur de l'évidement de boîtier (12) de type canal et la seconde butée (83) dans le prolongement axial de celui-ci sur une paroi terminale (14), délimitant côté avant l'évidement de boîtier (12), du boîtier d'entraînement (2).
